# FASCICULE DE BREVET EUROPEEN

(11) **EP 0 355 141 B1**
(45) Date de publication et mention de la délivrance du brevet: **20.10.1993**
(21) Numéro de dépôt: 89900837.9
(22) Date de dépôt: 21.12.1988
(51) Int. Cl.: A01B 29/04

(54) **APPAREIL DE TRAITEMENT DU SOL, NOTAMMENT PAR EMOTTAGE ET COMPACTAGE**
BODENBEARBEITUNGSGERÄT, INSBESONDERE ZUM VERKLEINERN UND VERDICHTEN VON ERDSCHOLLEN
IMPLEMENT FOR TREATING SOIL, IN PARTICULAR BY CLOD BREAKING AND COMPACTING

(30) Priorité: 22.12.1987 FR 8717949
(43) Date de publication de la demande: 28.02.1990
(73) Titulaire: ETABLISSEMENTS FRANQUET, F-02190 Guignicourt (FR)
(72) Inventeur: BOUCTON, Jean, F-51110 Bazancourt (FR); FRANQUET, Benoit, F-51100 Reims (FR)
(74) Mandataire: Gouvernal, Serge Lionel
(86) Numéro de dépôt international: FR8800632
(87) Numéro de publication internationale: WO8905572

(56) Documents cités:
- EP-A- 208 010
- DE-A- 2 824 808
- DE-A- 3 541 543
- DE-U- 8 710 820
- FR-A- 2 369 783
- GB-A- 212 703
- US-A- 2 261 893
- US-A- 2 300 851
- US-A- 2 503 317

## Description

La présente invention est relative à un appareil de traitement du sol, notamment par émottage et compactage.

On connait déjà en agriculture maints dispositifs de traitement du sol, destinés à l'ameublir et à le compacter en vue de permettre un nouvel ensemencement après récolte, ou bien à le traiter après déchaumage.

Les systèmes actuellement utilisés à cet effet présentent un certain nombre d'inconvénients majeurs, entre autres celui non négligeable de provoquer un bourrage en terre trop légère ou un encrottage en terrain lourd.

C'est ainsi, par exemple, que les brevets américains WOLFARD US-A-2 261 893 et US-A-2 300 851 décrivent des dispositifs à rouleaux pleins.

Le premier comporte un rouleau plein rotatif, pourvu de nervures hélicoïdales, les rainures de faible profondeur entre lesdites nervures étant nettoyées par des aillettes rotatives montées sur un arbre parallèle à l'axe du rouleau.

Le second qui comporte toutes les caractéristiques du préamble de la revendication 1 concerne un dispositif à deux rouleaux pleins pourvus chacun de nervures engrenant avec celles de l'autre rouleau plein, les rainures du rouleau arrière étant nettoyées par les dents d'étoiles tournant sur des axes fixes orthogonaux à l'axe de rotation du rouleau considéré.

Les dispositifs décrits dans ces brevets, au lieu d'émotter la terre, ont davantage tendance à la comprimer dans les rainures prévues entre les nervures des rouleaux.

La présente invention remédie à ces inconvénients et elle vise un appareil de traitement du sol par émottage et compactage, qui puisse, au choix, être utilisé seul ou en combinaison avec d'autres systèmes connus de préparation du sol.

L'appareil conforme à l'invention, qui peut de manière connue être attelé à un dispositif de traction, par exemple au système trois points d'un tracteur, et comporte un châssis porteur qui est angulairement orientable par rapport à l'axe de traction et dans lequel sont montés rotatifs, sur des axes parallèles, au moins deux éléments hélicoïdaux, de diamètre identique ou différent, et dont l'un au moins roule sur le sol et qui ont chacun un pas et un diamètre tel que, lors de leur rotation conjointe, la spire de l'un des éléments hélicoïdaux de travail reste en contact étroit avec la spire de l'autre élément hélicoïdal de travail ou des autres éléments hélicoïdaux de travail, est caractérisé en ce qu'il comporte les caractéristiques de la partie caractérisante de la revendication 1.

Selon une autre caractéristique de l'invention, pour assurer que les spires d'un élément hélicoïdal se déplacent en restant constamment en contact avec les spires du ou des autres éléments hélicoïdaux, ces éléments hélicoïdaux sont desmodromiquement couplés en rotation les uns avec les autres.

Dans une forme de réalisation préférée de l'appareil de traitement du sol, et pour assurer la liaison desmodromique des éléments hélicoïdaux en rotation, chacun des arbres (7, 8 ; 7',8' ; 7'', 8'' ; 7''', 8''' et 18) qui supporte, par des bras (20), une lame hélicoïdale de travail (9, 10 ; 9', 10' ; 9'', 10'' et 17) correspondante, est pourvu de manière connue, à l'une de ses extrémités, d'un pignon denté (11, 12) ; 11', 12') sur lequel passe une chaîne sans fin (13, 13' 13'', 19), qui est commune à deux éléments hélicoïdaux au moins.

D'autres caractéristiques et avantages de l'invention ressortiront de la description qui va suivre en regard des dessins annexés qui représentent, schématiquement et simplement à titre d'exemple, divers modes de réalisation d'un appareil émotteur et compacteur utilisable en agriculture.

Sur ces dessins :
- La Fig. 1: est une vue en plan de dessus d'une première forme de réalisation d'un appareil émotteur-compacteur, comportant deux éléments hélicoïdaux identiques roulant tous deux sur le sol ;
- La Fig. 2: est une vue de profil en élévation de l'appareil illustré à la Fig. 1, sans la chaîne de liaison ;
- La Fig. 3: est une vue en perspective, de l'arrière, avec arrachement partiel, de l'appareil des figures 1 et 2 ;
- La Fig. 4: est une vue de profil en élévation d'une première variante de réalisation de l'appareil, comportant deux éléments hélicoïdaux différents, ne prenant pas tous deux appui sur le sol ;
- La Fig. 5: est une vue de profil en élévation d'une seconde variante de réalisation de l'appareil ;
- La Fig. 6: est une vue de profil, également en élévation, d'une troisième forme de réalisation de l'appareil.

L'appareil conforme à l'invention comporte un châssis pourvu de moyens d'attelage à un tracteur, par exemple un timon orientable par rapport à l'axe des éléments hélicoïdaux formant la partie essentielle de l'appareil. Ces moyens connus, ne faisant pas spécialement partie de l'invention, n'ont pas été représentés par raison de simplicité.

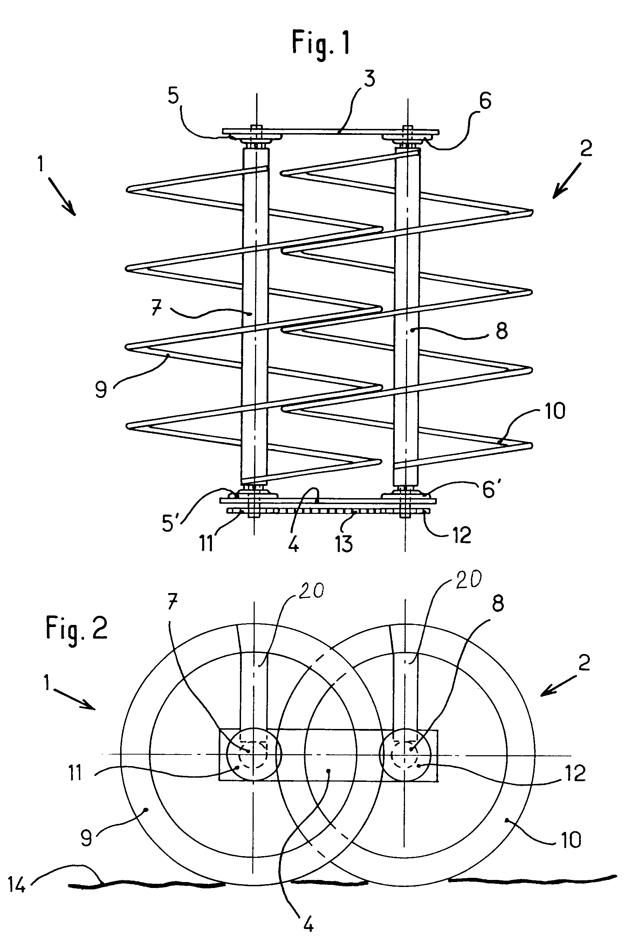

Sur la figure 1 des dessins annexés, on voit que dans sa première forme de réalisation, l'appareil comporte deux éléments identiques désignés dans leur ensemble par les références 1 et 2 et montés rotatifs parallèlement l'un à l'autre dans un châssis formé de deux jumelles opposées 3 et 4 équipées chacune de paliers 5, 5' et 6, 6', recevant respectivement les arbres 7 et 8 portant les lames hélicoïdales 9 et 10, respectivement. A l'une de leurs extrémités, en l'occurrence au voisinage de la jumelle 4 portant les paliers 5' et 6', les arbres 7 et 8 des éléments hélicoïdaux 1 et 2 de l'appareil sont pourvus chacun d'un pignon 11, respectivement 12, sur chacun desquels passe une chaîne sans fin 13 destinée à coupler en rotation les deux éléments hélicoïdaux 1 et 2, c'est-à-dire à les faire tourner tous les deux, même si seulement l'un d'entre eux repose sur le sol.

A la figure 2, on voit que les éléments hélicoïdaux 1 et 2 présentent des lames 9 et 10 identiques, c est-à-dire de même diamètre et de même pas. En roulant sur le sol 14, les spires hélicoïdales 9 de l'élément 1 de l'appareil font tourner l'arbre 7 les portant et, par suite, également le pignon denté 11 prévu à l'extrémité dudit arbre 1, à l'extérieur de la jumelle 4 portant le palier 5' le supportant, ce qui fait que la chaîne 13 passant sur ledit pignon 11 se déplace et fait à son tour tourner en synchromisme le pignon denté 12 prévu à l'extrémité de l'arbre 8 porté par le palier 6' et comportant le même nombre de dents que le pignon 11. L'arbre 8 tourne alors dans le même sens que l'arbre 7 et entraîne en rotation les spires de la lame 10. Dans ce mouvement réciproque des spires des lames 9 et 10, ces dernières, en étroit contact mutuel, se trouvent débarrassées de la terre qu'elles ont pu retenir, par exemple en terrain gras.

On assure ainsi un nettoyage continu parfait des deux éléments hélicoïdaux, dont l'action est alors maximale.

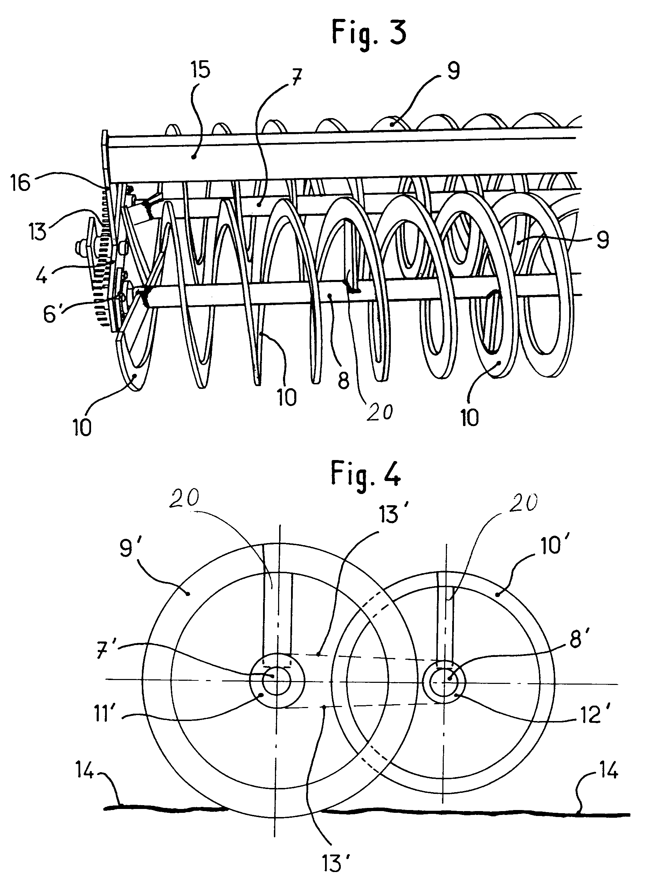

La figure 3 est une vue partielle en perspective de la première forme de réalisation de l'appareil, dans laquelle on peut voir le châssis 15 dudit appareil, relié par des flasques telles que 16 aux jumelles portant les arbres 7 et 8. Pour permettre d'orienter ce châssis 15 de manière que les éléments hélicoïdaux 1 et 2 (cf. Fig. 1) fassent un angle aigu plus ou moins prononcé avec la direction de traction, il comporte des moyens connus, non spécialement représentés ici par raison de clarté du dessin, par exemple un limbe semi-circulaire à perforations d'ajustement avec clavette, pour régler la direction des arbres 7 et 8 par rapport à la direction d'avance du tracteur tirant l'appareil conforme à l'invention.

Comme on l'a indiqué précédemment, la figure 4 représente en élévation latérale un appareil conforme à l'invention, mais équipé d'un élément hélicoïdal à spires 9' reposant sur le sol et coopérant avec un élément de plus petit diamètre dont les spires 10', quant à elles, ne reposent pas sur le sol 14.

Dans cette forme de réalisation de l'appareil, pour assurer le contact permanent entre les spires 9' et 10' en vue de leur nettoyage, les pignons dentés 11' et 12' associés aux arbres 7' et 8' ont un nombre de dents différents, fonction chaque fois du pas correspondant des lames 9' ou 10' de l'élément hélicoïdal considéré. Dans ce cas, la différence de pas entre les spires des lames respectives 9' et 10' est compensée par la vitesse de rotation différente des arbres 7' et 8', l'arbre 8', entraîné par la chaîne 13', tournant plus vite que l'arbre 7', mais dans le même sens.

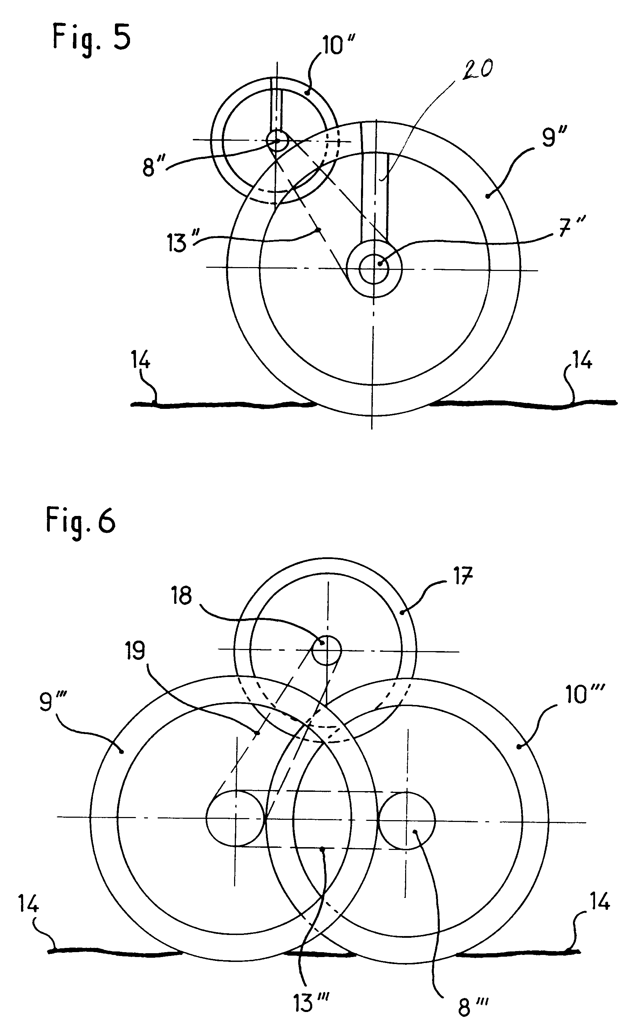

La Fig. 5 représente une autre variante de l'appareil, dans laquelle la différence de diamètre des deux éléments hélicoïdaux est encore plus grande, ce qui fait que les lames 9'' et 10'', portées par les arbres 7'' et 8'', tournent avec une différence de vitesse encore plus grande entre elles l'angle aigu, compris entre les brins aller et retour de la chaîne sans fin 13'' qui passent sur les pignons dentés afférents aux arbres 7'' et 8'', ayant une valeur plus importante qu'à la figure 4.

Finalement, la figure 6 représente un mode de réalisation de l'appareil conforme à l'invention, comportant trois éléments hélicoïdaux dont les lames 9''', 10''' et 17 sont portées par des arbres parallèles entre eux, à savoir les arbres 7''', 8''' et 18, passant par les sommets d'un triangle formant chaque jumelle d'assemblage des éléments rotatifs hélicoïdaux.

Dans ce mode de réalisation, donné simplement à titre d'exemple, les lames hélicoïdales 9''' et 10''' sont de même pas et de même diamètre et elles coopèrent simultanément entre elles et avec un troisième élément dont la lame 17 est pourvue de spires plus petites et de pas différent des deux autres lames 9''' et 10'''. Dans cette forme d'exécution, l'arbre 7''' du premier gros élément hélicoïdal porte deux pignons dentés présentant un nombre de dents différents, ces pignons se trouvant soit tous les deux sur une extrémité dudit arbre, soit chacun à l'une des extrémités opposées de cet arbre 7'''. Les arbres 7''' et 8''' sont couplés entre eux par une chaîne désignée par la référence 13'''. Quant à l'arbre 7''', il est également couplé à l'arbre 18 portant la lame hélicoïdale 17, en l'occurrence par une chaîne 19.

Dans tous les exemples de réalisation qui viennent d'être décrits, les diverses spires peuvent avoir en section droite une forme différente, adaptée à chaque cas spécifique.

C'est ainsi que les spires peuvent en section avoir une forme rectangulaire, carrée , rhombique, ovale ou tout simplement ronde, le choix de ces formes étant à faire en fonction du diamètre, des vitesses de rotation et du pas des spires des lames et également des conditions du terrain et de la nature de la terre travaillée par lesdites lames.

Il va de soi que l'invention n'a été décrite et représentée qu'à titre purement explicatif, nullement limitatif, et que diverses modifications de détail pourraient être apportées aux diverses formes de réalisation indiquées sans que l'on sorte pour autant du domaine de l'invention tel que défini par les revendications.

## Revendications

1. Appareil de traitement du sol, notamment par émottage et compactage, qui peut de manière connue être attelé à un dispositif de traction, par exemple au système trois points d'un tracteur, et qui comporte un châssis porteur (15) angulairement orientable par rapport à l'axe de traction et dans lequel sont montés rotatifs, sur des axes parallèles au moins deux éléments hélicoïdaux de travail, de diamètre identique ou différent, dont l'un au moins roule sur le sol: et qui ont chacun un pas et un diamètre tel que, lors de leur rotation conjointe, la spire de l'un des éléments hélicoïdaux de travail reste en contact étroit avec la spire de l'autre élément hélicoïdal de travail ou des autres éléments hélicoïdaux de travail, caractérisé en ce que chaque élément hélicoïdal de travail est constitué par un arbre rotatif (7, 8 ; 7', 8' ; 7'', 8'' ; 7''', 8''' et 18) comprenant des bras radiaux (20) soutenant chacun, par leur extrémité extérieure, la spire constituée par une lame de travail hélicoïdale continue enveloppant une cavité cylindrique annulaire la distance séparant chaque fois les axes de rotation des arbres de deux éléments hélicoïdaux de travail voisins étant largement inférieure à la somme des rayons desdits éléments hélicoïdaux de travail, de façon que chaque lame hélicoïdale pénétre dans la cavité cylindrique annulaire de l'autre élément hélicoïdal de travail suivant un axe orthogonal à leur axe de rotation.

2. Appareil selon la revendication 1, caractérisé par le fait que les lames hélicoïdales de travail de deux éléments qui s'interpénètrent, présentent un diamètre identique ou différent, le pas de leurs spires étant tel que, lors de la rotation desmodromique de deux lames voisines qui s'interpénètrent, les spires de l'une restent constamment en contact étroit avec les spires de l'autre.

3. Appareil selon la revendication 1, caractérisé par le fait que chacun des arbres (7, 8 ; 7',8' ; 7'', 8'' ; 7''', 8''' et 18) qui supporte, par les bras (20), une lame hélicoïdale de travail (9, 10 ; 9', 10' ; 9'', 10'', 9''', 10''' et 17) correspondante, est pour vu de manière connue, à l'une de ses extrémités, d'un pignon denté (11, 12) ; 11', 12') sur lequel passe une chaîne sans fin (13, 13', 13'', 19), qui est commune à deux éléments hélicoïdaux au moins,

4. Appareil selon les revendications 1 à 3, caractérisé par le fait que le diamètre de la lame hélicoïdale (9) de travail d'un premier élément est égal à celui de la lame hélicoïdale (10) de travail du second élément associe.

5. Appareil selon l'une des revendications 1 à 4, caractérisé par le fait que deux éléments hélicoïdaux (1, 2) à lame hélicoídale creuse (9, 10) roulent sur le sol.

6. Appareil selon l'une des revendications 1 à 5, caractérisé par le fait que les lames hélicoïdales creuses de deux éléments voisins qui s'interpénètrent sont réalisées avec le même profilé.

7. Appareil selon l'une des revendications 1 à 6, caractérisé par le fait que les lames hélicoïdales ont une section droite quadratique.

8. Appareil selon l'une des revendications 1 à 6, caractérisé par le fait que les lames hélicoïdales présentent en section un profil arrondi.

## Claims

1. Implement for treating soil, in particular by clod breaking and compacting, which may be linked in a known manner to a pulling device, for example to the three point system of a tractor and which comprises a carrying frame (15) which is angularly orientable relative to the pulling axis and in which there are rotatably mounted, on parallel axes, at least two helical working elements of identical or different diameters of which at least one rolls on the ground and which each have a pitch and a diameter such that, during their joint rotation, the turn of one of the helical working elements remains in close contact with the turn of the other helical working element or other helical working elements, characterised in that each helical working element consists of a rotating shaft (7, 8; 7', 8'; 7'', 8'' 7''', 8''' and 18) comprising radial arms (20) each supporting, by their external end, the turn formed by a continuous helical working blade surrounding an annular cylindrical cavity, the distance separating the respective axes of rotation of the shafts of two adjacent helical working elements being much smaller than the sum of the radii of said helical working elements such that each helical blade penetrates into the annular cylindrical cavity of the other helical working element along an axis which is orthogonal to their axis of rotation.

2. Implement according to claim 1, characterised in that the helical working blades of two intermeshing elements have an identical or different diameter, the pitch of their turns being such that, during the positive rotation of two adjacent intermeshing blades, the turns of one remain constantly in close contact with the turns of the other.

3. Implement according to claim 1, characterised in that each of the shafts (7, 8; 7', 8'; 7'', 8'' 7''', 8''' and 18) supporting, by the arms (20), a corresponding helical working blade (9, 10; 9' , 10'; 9'', 10'', 9''', 10''' and 17), is provided in a known manner at one of its ends with a toothed pinion (11, 12; 11', 12') over which there passes an endless chain (13, 13', 13'', 19) which is common to at least two helical elements.

4. Implement according to claims 1 to 3, characterised in that the diameter of the helical working blade (9) of a first element is equal to that of the working helical blade (10) of the associated second element.

5. Implement according to one of claims 1 to 4, characterised in that two helical elements (1, 2) having a hollow helical blade (9, 10) roll on the ground.

6. Implement according to one of claims 1 to 5, characterised in that the hollow helical blades of two intermeshing adjacent elements are produced with the same profile.

7. Implement according to one of claims 1 to 6, characterised in that the helical blades have a quadratic cross section.

8. Implement according to one of claims 1 to 6, characterised in that the helical blades have a rounded profile in section.

## Patentansprüche

1. Bodenbearbeitungsvorrichtung, insbesondere zum Zerschlagen von Erdschollen und zum Verfestigen, die in an sich bekannter Weise an eine Zugmaschine, beispielsweise an ein Dreipunktsystem einer Zugmaschine angehängt werden kann und die einen Tragrahmen (15) umfaßt, der im Winkel bezüglich der Zugachse ausgerichtet werden kann und an dem um zwei parallele Achsen drehbar wenigstens zwei schraubenförmige Arbeitselemente mit gleichem oder verschiedenem Durchmesser angebracht sind, von denen wenigstens eines auf dem Boden abrollt und die jeweils eine derartige Ganghöhe und einen derartigen Durchmesser haben, daß bei ihrer gemeinsamen Drehung der Schraubengang eines der schraubenförmigen Arbeitselemente in einem engen Kontakt mit dem Schraubengang des anderen schraubenförmigen Arbeitselementes oder der anderen schraubenförmigen Arbeitselemente steht, dadurch gekennzeichnet, daß jedes schraubenförmige Arbeitselement aus einer Drehachse (7, 8; 7', 8'; 7'', 8''; 7''', 8''' und 18) mit radialen Armen (20) besteht, die jeweils an ihrem äußerem Ende den Schraubengang halten, der von einem schraubenförmigen durchgehenden Arbeitsblatt gebildet ist, das einen zylindrischen ringförmigen Hohlraum umgibt, wobei der Abstand, der die Drehachsen der Achsen der beiden schraubenförmigen benachbarten Arbeitselemente trennt, wesentlich kleiner als die Summe der Radien der schraubenförmigen Arbeitselemente ist, derart, daß jedes Schraubenblatt in den zylindrischen ringförmigen Hohlraum des anderen schraubenförmigen Arbeitselementes längs einer zur Drehachse orthogonalen Achse eintritt.

2. Vorrichtung nach Anspruch 1, dadurch gekennzeichnet, daß die schraubenförmigen Arbeitsblätter der beiden Elemente, die ineinander greifen, einen gleichen oder verschiedenen Durchmesser haben, wobei die Ganghöhe ihrer Schraubengänge derart ist, daß bei einer gemeinsamen Drehung der beiden benachbarten Blätter, die ineinander greifen, die Schraubengänge des einen konstant in einem engen Kontakt mit den Schraubengängen des anderen stehen.

3. Vorrichtung nach Anspruch 1, dadurch gekennzeichnet, daß jede Achse (7, 8, 7', 8', 7'', 8'', 7''', 8''' und 18), die über die Arme (20) ein schraubenförmiges Arbeitsblatt (9, 10, 9', 10', 9'', 10'', 9''', 10''' und 17) trägt, in bekannter Weise an einem ihrer Enden mit einem Ritzel (11, 12, 11', 12'') versehen ist, über das eine Endloskette (13, 13, 13'', 19) führt, die wenigstens zwei schraubenförmigen Elementen gemeinsam ist.

4. Vorrichtung nach Anspruch 1 bis 3, dadurch gekennzeichnet, daß der Durchmesser des schraubenförmigen Arbeitsblattes (9) eines ersten Elementes gleich dem des schraubenförmigen Arbeitsblattes (10) eines zugehörigen zweiten Elementes ist.

5. Vorrichtung nach einem der Ansprüche 1 bis 4, dadurch gekennzeichnet, daß zwei schraubenförmige Elemente (1, 2) mit tiefen Schraubenblättern (9, 10) auf dem Boden abrollen.

6. Vorrichtung nach einem der Ansprüche 1 bis 5, dadurch gekennzeichnet, daß die tiefen Schraubenblätter der beiden benachbarten Elemente, die ineinandergreifen, mit dem gleichen Profil ausgebildet sind.

7. Vorrichtung nach einem der Ansprüche 1 bis 6, dadurch gekennzeichnet, daß die Schraubenblätter einen quadratischen Querschnitt haben.

8. Vorrichtung nach einem der Ansprüche 1 bis 6, dadurch gekennzeichnet, daß die Schraubenblätter im Schnitt ein abgerundetes Profil zeigen.
